# EUROPEAN PATENT APPLICATION

(11) **EP 4 838 425 A1**
(43) Date of publication of application: **11.11.2026**
(21) Application number: 25174806.7
(22) Date of filing: 07.05.2025
(51) Int. Cl.: G06N 10/40

(54) **PROCESSING SIGNALS ASSOCIATED WITH A QUANTUM COMPUTING SYSTEM**

(71) Applicant: Qblox Holding B.V., 2628 XH Delft (NL)
(72) Inventor: van Straten, Jeroen, 2628 XH Delft (NL); van Eijk, Tijmen Jacobus Walterus, 2628 XH Delft (NL)
(74) Representative: De Vries & Metman

(57) **Abstract**

Methods and systems for processing signals associated with a quantum computing system are described wherein the quantum computing system is controlled by at least a control module comprising a plurality of data processing channels, each data processing channel being controlled by a sequence processor and including a timetag logic block, a timetag processing logic block, a pulse processing logic block and state computation logic block, wherein the method includes: timetagging, by a first timetag logic block in a first data processing channel, one or more pulses of a first thresholded analog signal received at a first input terminal of the first data processing channel, to form a first timetag signal comprising one or more first timetags representing one or more first events associated with a first detector of the quantum computing system; determining, by a first timetag processing logic block, one or more timetags in the timetag signal that occur within the first time window and a first timetag count value based on the one or more determined timetags; and/or, determining, by a first pulse processing logic block, one or more pulses in the thresholded analog signal that occur within the first time window and a first pulse count value based on the one or more determined pulses; and, determining, by a first state computation logic block, first state information associated with the quantum computing system based the first timetag and/or pulse count value and based at least one further timetag and/or pulse count value determined by a further data processing channel of the plurality of data processing channels.

## Description

### Technical field

The embodiments relate to processing signals associated with a quantum computing system, and, in particular, though not exclusively, to methods and systems for processing signals of a quantum computing system such as a photonic quantum computing system or a quantum communication system.

### Background

Quantum computing systems, in particular photonic quantum computing systems and quantum communication systems, require highly accurate, time-critical control electronics to control different types of qubits, including entangled photonic qubits, that are processed by different quantum nodes which may be separated from each other over long distances. The stringent constraints are associated with the limited lifetime of the quantum states of the qubits and the control of the components in the quantum nodes to perform critical processes, for example creating optimal time-bin qubits and performing Bell state measurements.

In contrast to non-optical quantum computing systems, in which typically RF based signals need to be translated into information about quantum states, in optical quantum computing and communication systems, signals are often optical and measured as analog pulses based on which information about a quantum state of a qubit needs to be derived.

To provide a scalable infrastructure for quantum computing and quantum communication, a quantum network stack is being developed for quantum network nodes comprising different types of qubits, including qubits that are designed to realize high-fidelity entanglements between optical qubits at high rates. The layered quantum network stack including a physical layer, a link layer, a network layer and a transport layer allows executing an quantum application.

An example of a complex quantum computing system is a quantum communication network as described in Van der Enden et al., Metropolitan-scale heralded entanglement of solid-state qubits, Science Advances, Vol 10, Issue 44, 2024. The quantum network includes nodes at a metropolitan-scale distance so that attenuation and scrambling effects of the photonic qubits in the fibres are small. Large distance quantum communication however requires quantum repeater nodes that are placed between two quantum end-nodes. A quantum repeater comprising qubits for storage and qubits for communication is described in the article by Krutyanskiy et al, A telecom-wavelength quantum repeater node based on a trapped-ion processor, Phys. Rev. Lett. 130, 213601. This device is configured to execute complex protocols to set up two separate entanglement links with two end nodes and subsequently establishing an entanglement link between the two end-nodes based a Bell state measurement at the repeater node.

Systems for repeater-assisted entanglement over large distances are typical examples of a quantum computing systems requiring high-speed, time critical control electronics so that protocols that include e.g. real-time execution repeat-until success and conditional feedback operations can be executed at the physical layer of the quantum network stack without giving control to a host computer of the quantum system that manages high-level execution of the quantum application.

Hence, there is a need in the art for control electronics for quantum computing systems for real-time processing of analog pulse signals that are associated with executing a quantum application on such quantum computing systems.

### Summary

The methods, systems, modules, functions and/or algorithms described with reference to the embodiments in this application may be realized in hardware, software, or a combination of hardware and software. The methods, systems, modules, functions and/or algorithms may be realized in a centralized fashion in at least one computing system, or in a distributed fashion where different elements are spread across several interconnected computing systems. Any kind of computing system or other apparatus adapted for carrying out the embodiments (or parts thereof) described in this application is suited.

A typical implementation of the embodiments in this disclosure may comprise one or more digital circuits such as application specific integrated circuits (ASICs), one or more field programmable gate arrays (FPGAs), and/or one or more processors (e.g., x86, x64, ARM, PIC, and/or any other suitable processor architecture) and associated supporting circuitry (e.g., storage, DRAM, FLASH, bus interface circuits, etc.). Each discrete ASIC, FPGA, processor, or other circuit may be referred to as "chip," and multiple such circuits may be referred to as a "chipset." In an implementation, the programmable logic devices may be provided with fast RAM, in particular block RAM (BRAM). Another implementation may comprise a non-transitory machine-readable (e.g., computer readable) medium (e.g., FLASH drive, optical disk, magnetic storage disk, or the like) having stored thereon one or more lines of code that, when executed by a machine, cause the machine to perform processes as described in this disclosure.

The flowcharts and block diagrams in the figures may represent architecture, functionality, and operation of possible implementations of the methods, systems and/or modules to various embodiments of the present invention. In this regard, each block in a flowchart or a block diagram may represent a module, segment, or portion of code, which be implemented as software, hardware or a combination of software and hardware.

It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In an aspect, the embodiments in this disclosure relate to a method of processing signals associated with a quantum computing system, controlled by at least a control module comprising a plurality of data processing channels, each data processing channel being controlled by a sequence processor. Each data processing channel may include a timetag logic block, a timetag processing logic block, a pulse processing logic block and state computation logic block.

In an embodiment, the method may include timetagging, by a first timetag logic block in a first data processing channel, one or more pulses of a first thresholded analog signal received at a first input terminal of the first data processing channel, to form a first timetag signal comprising one or more first timetags representing one or more first events associated with a first detector of the quantum computing system;

In an embodiment, the method may include determining, by a first timetag processing logic block, one or more timetags in the timetag signal that occur within the first time window and a first timetag count value based on the one or more determined timetags.

In an embodiment, the method may include determining, by a first pulse processing logic block, one or more pulses in the thresholded analog signal that occur within the first time window and a first pulse count value based on the one or more determined pulses.

In an embodiment, the method may include determining, by a first state computation logic block, first state information associated with the quantum computing system based the first timetag and/or pulse count value and based at least one further timetag and/or pulse count value determined by a further data processing channel of the plurality of data processing channels.

The control module comprising sequencer-controlled channels as described with reference to embodiments described in this disclosure configured to perform windowed timetaging and windowed event counting for a thresholded analog pulse signal and to determine state information of a quantum computing system in real-time (i.e. within one or a few clock cycles) by combining measured timetags and/or event counts of one channel with timetags and/or event counts determined by other channels of the control module. The state information may be used by the sequencer of the control channel to perform a further operation, e.g. configure a channel of the control module to send out a particular pulse at a certain time instance, a certain width and a certain amplitude; and/or, to configure a channel of the control module to measure within a time window pulses and/or events originating from the quantum system

The sequencer-controlled channels of the control module according to the embodiments in this disclosure allow autonomous execution of a complex protocol for a quantum computing system, such as a quantum repeater, which may include a repeat until success sequence. No interaction between the host and the control module is required thereby providing a substantial increase in speed of execution of the protocol and ease of use. The sequencer-based control modules provide easy, fast and reliable control of quantum applications that include complex quantum processes.

In an embodiment, the method may further comprise at least one of: controlling, by the first sequence processor, the first data processing channel based the first state information and/or based the one or more determined timetags; sharing the first state information and/or the one or more determined timetags with one or more one or more further data processing channels of the plurality of data processing channels of the control module; and/or, sending, by the first sequence processor, the first state information and/or the one or more determined timetags to one or more sequence processors of a further control module that is controlling the quantum computing system.

In an embodiment, the method may further comprise: comparing the first timetag and/or pulse count value with a count threshold value to determine a thresholded count value; and, storing the thresholded count value in a memory.

In an embodiment, the first state computation logic block may include a programmable look up table configured to apply one or more mathematical operations based on at least part of the first timetag and/or pulse count value and/or the least one further timetag and/or pulse count value.

In an embodiment, the method may further comprise: receiving a first analog signal originating from a detector associated with the quantum computing system; providing the first analog signal to a threshold module configured to threshold the first analog signal based on a threshold value to form the first thresholded analog pulse signal.

In an embodiment, the method may include providing the first analog signal to a second threshold module configured to threshold the first analog signal based on a second threshold value to form the second thresholded analog pulse signal, the second threshold value being different from the first threshold value.

In an embodiment, the method may further comprise: determining, by a second timetag processing logic block, one or more timetags in the second timetag signal that occur within the second time window and a second timetag count value based on the one or more determined timetags; and/or, determining, by a second pulse processing logic block, one or more pulses in the second thresholded analog signal that occur within the second time window and a second pulse count value; and, further determining the first state information based on the second timetag and/or pulse count value.

In an embodiment, the determining and counting, by the first timetag processing logic block, of the one or more timetags in the timetag signal may be executed in parallel with the determining and counting, by the first pulse processing logic block, of the one or more pulses in the thresholded analog signal.

In an embodiment, the determining, by the first timetag processing logic block, of the one or more timetags in the timetag signal may further include: storing at least part of the timetags in a memory, each of the timetags being associated with a clock time instance determined based on a clock signal; selecting a reference time instance; and, computing a relative time instance for a stored timetag based on the reference time instance and the clock time instance.

In an embodiment, the reference time instance may be selected from at least one of: a time instance associated with a start or end of the time window; a time instance determined by the sequence processor; a time instance received from a sequence processor from one of the plurality of data processing channels

In an embodiment, the first state information may be shared via one or more direct data paths between the first data processing channel and the one or more further data processing channels of the control module.

In an embodiment, the sequence processors of the plurality of data processing channels may be configured to execute different software parts of a quantum application, preferably the execution of the software parts by the sequence processors being synchronized.

In an aspect, the embodiments in this disclosure may relate to a control module for processing signals associated with a quantum computing system, the control module comprising a plurality of data processing channels, each data processing channel being controlled by a sequence processor. A data processing channel including a timetag logic block, a timetag processing logic block, a pulse processing logic block and state computation logic block.

In an embodiment, the module may include: a processor, preferably a microprocessor, coupled to a computer readable storage medium having program code embodied therewith, wherein responsive to executing the program code, the processor being configured to perform executable operations comprising.

In an embodiment, an executable operation may include controlling a first timetag logic block in a first data processing channel to timetag one or more pulses of a first thresholded analog signal received at a first input terminal of the first data processing channel, the timetags forming a first timetag signal comprising one or more first timetags representing one or more first events associated with a first detector of the quantum computing system.

In an embodiment, an executable operation may include controlling a first timetag processing logic block to determine one or more timetags in the timetag signal that occur within the first time window and a first count value based on the determined one or more timetags; and/or, controlling a first pulse processing logic block to determine one or more pulses in the thresholded analog signal that occur within the first time window and a second count value based on the determined one or more pulses.

In an embodiment, an executable operation may include controlling a first state computation logic block to determine first state information associated with the quantum comprising system based the first timetag and/or pulse count value and based at least one further timetag and/or pulse count value determined by a further data processing channel of the plurality of data processing channels.

In various further embodiments, the processor of the control module may be further configured to perform the steps according to the above-described embodiments.

In a further aspect, the embodiments in this disclosure may relate to a control module for processing signals associated with a quantum computing system, which is controlled by at least one control module comprising a plurality of data processing channels. A data processing channel may be controlled by a sequence processor and may include a timetag logic block, a timetag processing logic block, a pulse processing logic block and state computation logic block.

In an embodiment, the control module may include: a first timetag logic block in a first data processing channel configured to timetag one or more pulses of a first thresholded analog signal received at a first input terminal of the first data processing channel, to form a first timetag signal comprising one or more first timetags representing one or more first events associated with a first detector of the quantum computing system.

In an embodiment, the control module may include: a first timetag processing logic block configured to determine one or more timetags in the timetag signal that occur within the first time window and a first timetag count value based on the one or more determined timetags.

In an embodiment, the control module may include: a first pulse processing logic block configured to determine one or more pulses in the thresholded analog signal that occur within the first time window and a first pulse count value based on the determined one or more pulses.

In an embodiment, the control module may include a first state computation logic block in the first data processing channel configured to determine first state information associated with the quantum comprising system based the first timetag and/or pulse count value and based on at least one further timetag and/or pulse count value determined by at least one further data processing channel of the plurality of data processing channels.

In a further aspect, the embodiments in this disclosure may also relate to a system for controlling a quantum computing system, wherein the system includes a plurality of control modules as described with reference to the embodiments in this disclosure.

In an embodiment, a control module according to any of the embodiments described in this disclosure may be implemented as one or more digital circuits such as application specific integrated circuits (ASICs), one or more field programmable gate arrays (FPGAs), and/or one or more microprocessors.

The embodiments may also relate to a computer program product comprising instructions which, when the program is executed by a computer, cause the computer to carry the method steps according to any of the steps as described with reference to the embodiments above.

The embodiments will be further illustrated with reference to the attached drawings, which schematically will show embodiments according to the invention. It will be understood that the embodiments are not in any way restricted to these specific embodiments.

### Brief description of the drawings

**Fig. 1A** and **1B** show an example of a photonic quantum computing system;
**Fig. 2A** and **2B** illustrate a practical implementation of a quantum repeater network node;
**Fig. 3** depicts a schematic of a system for controlling a quantum computing system according to an embodiment;
**Fig. 4** depicts a schematic of a control module for controlling a quantum computing system according to an embodiment;
**Fig. 5** depicts a flow diagram of processing signals associated with a quantum computing system according to an embodiment;
**Fig. 6** depicts a timing diagram illustrating control of a quantum computing system according to an embodiment;
**Fig. 7** depicts a system of control modules for controlling a quantum computing system according to an embodiment;
**Fig. 8** depicts a timing diagram illustrating control of a quantum computing system according to another embodiment;
**Fig. 9** depicts an exemplary implementation of a method for controlling a quantum repeater using a plurality of control modules according to an embodiment;
**Fig. 10** depicts a schematic of a control module for controlling a quantum computing system according to an embodiment;
**Fig. 11** depicts a schematic of part of a control module for controlling a quantum computing system according to a further embodiment;
**Fig. 12** depicts an example of an edge-detect/sample digital processing path according to an embodiment;
**Fig. 13** depicts an example of a timetagging processing path according to an embodiment;
**Fig. 14** depicts an example of an event counting digital processing path. according to an embodiment.

### Description of the embodiments

The embodiments in this disclosure relate to control modules for controlling a quantum computing system, e.g. a photonic quantum computing system or a quantum communication system. An example of such a photonic quantum computing system is a quantum network node, which is configured to produce quantum entanglement with other quantum network nodes. Quantum network nodes may be connected to each other via an optical fibre network for transmission of optical qubits and a classical communication network for transmission of signalling messages to control the transmission of the qubits and the establishment of entanglement between nodes. Typically, the establishment of entanglements include the network nodes executing a synchronized protocol.

Architectures and protocols for producing entanglement between quantum network nodes are complex and require fast and accurate synchronized control of signals, typically optical pulses, sent over the optical network to the quantum network nodes and optical signals originating from the quantum network nodes. These entanglements may be used to execute quantum communication applications, including quantum key distribution and distributed quantum computing. Conventional electronics for controlling such complex photonic quantum computing and quantum communication systems are built ad-hoc for specific setups and provide sub-optimal control in terms of speed and accuracy.

Establishing entanglement over large distances requires one or more repeater nodes between two end-nodes, wherein each quantum repeater comprises qubits for storage and qubits for communication. Control of repeater-assisted entanglement over large distances is complex due the time-constraints associated with the entangled states and the number of components in each quantum repeater that need to be controlled accurately and real-time based on complex protocols that may include execution repeat-until success and conditional feedback operations. The embodiments in this disclosure include control modules that enable control of quantum computing systems so that such complex protocols can be executed.

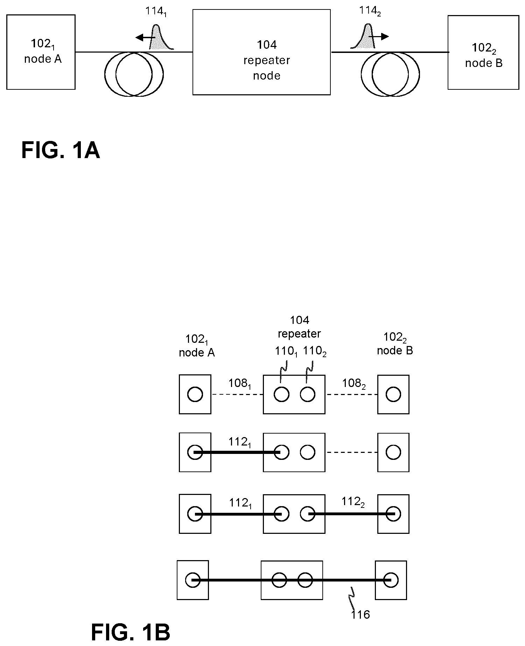

**Fig. 1A** shows an example of a photonic quantum system. In particular, the figure depicts an intermediate quantum network node **104,** in this example a quantum repeater, which is optically connected via two fibre connections to a first and second quantum end-node **102_{1,2}**, Each quantum node may comprise an optical quantum processor, wherein the quantum repeater node may be configured to establish end-to-end quantum entanglement between the first and second end-nodes. The nodes may be part of a quantum communications network, wherein communication between the nodes may be based on light pulses, typically single photon pulses.

**Fig. 1B** depicts a high-level schematic of repeater-based entanglement establishment between two quantum nodes. The figure illustrates a quantum repeater **104** including two qubits **110_{1,2}** connected via an optical communication channel **108_{1,2}** to two quantum nodes **102_{1,2}**, each comprising at least one qubit. The repeater may start to make attempts to make an entanglement link between the qubit in a node and a qubit of the repeater. Once a first entanglement link **112₁** is established, the repeater will continue establishing the second entanglement link. Once the second entanglement link **112₁** is also established, a Bell state measurement at the quantum repeater is used to establish entanglement **116** between the qubits in the nodes.

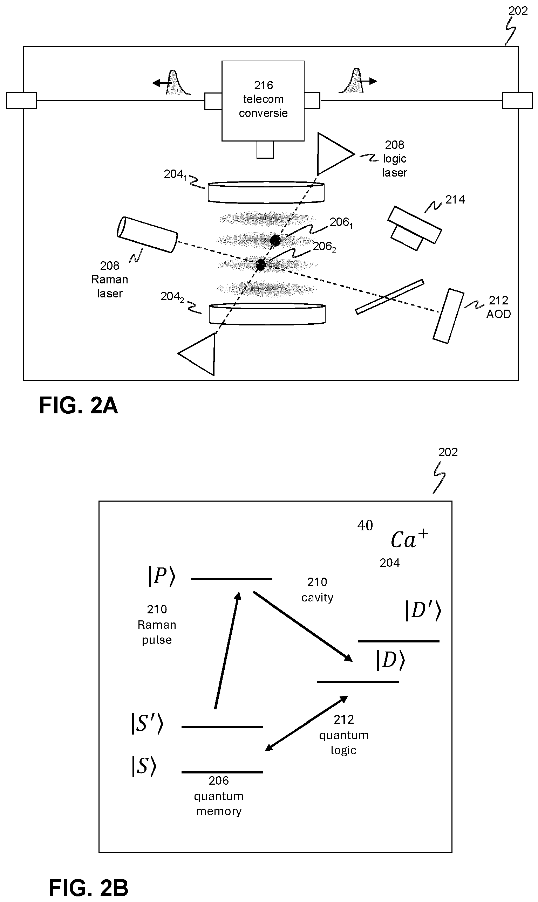

A quantum repeater may be implemented in various ways. A schematic of an implementation as described in Krutyanskiy et al, *A telecom-wavelength quantum repeater node based on a trapped-ion processor*, of a quantum repeater network node is depicted in **Fig. 2A** and **2B****.** In this scheme, ions **206_{1,2}** are trapped in a cavity integrated linear paul trap **204_{1,2}**. In this example, two ⁴⁰Ca⁺ ions **206_{1,2}**, are trapped in the linear Paul trap Fabry-Perot optical cavity. Both ions are placed at neighbouring anti-nodes of a cavity mode, separated by 5.8 micrometer. A 393 nm laser **208** may be used to generate single photons using a cavity mediated bichromatic Raman transition. As shown in **Fig. 2B****,** Raman pulse **210** on an ion in state |S> ideally generates the maximally entangled state $\left(\left|D, H\right〉+\left|D′,V\right〉\right) / \sqrt{2}$. At this point, once the photon has exited the cavity, it is either used to realize the above protocol or it is measured by camera **214** and the ion is reinitialized by carrying out a measurement.

A protocol includes for realizing entanglement between the nodes via a quantum repeater may include the following steps:
1) Execute Doppler cooling (sequence of TTL state changes on lines A, B and C that is always the same). During Doppler cooling, the total number of detection events in the photomultiplier tube (PMT) are recorded.
2) Generate a 393 nm laser Raman pulse (Line A) corresponding to a radio frequency (RF) pulse to acoustic optical modulator AOM **212** of length T, frequency F and power P. During the 393 nm laser pulse, the number of counts detected by the single photon detector (SPD) are recorded by a time tagger.
3) In the case where the SPD did record at least one detection event during the laser pulse in step 2 then, after step 2 is completed, an ion state readout is executed, which corresponds to exactly the same sequence as Doppler cooling and, as always during Doppler cooling. Thereafter, the total number of detection events in the PMT is recorded.
4) In the case where the SPD did not record a single detection event during the laser pulse in step 2, then steps 1 and 2 are repeated until an SPD detection event is recorded or some maximum number of repetitions N is reached.

The recorded PMT counts in step 3 are stored as 'detection counts', separately from the counted values in step 1. Essentially, the experimental protocol is an example of a repeat-until-success process (or until a certain condition is fulfilled) at which point a secondary sequence is carried out. The embodiments in this disclosure aim to provide control modules for real-time execution of complex protocols on a photonic quantum system, such as a quantum repeater'

Hence, as described with reference to **Fig. 1** and **2****,** typically the quantum communication system may include a plurality of optical control elements, e.g. optical detectors for detecting optical signals associated with an optical readout of a qubit, and optical transmitters, e.g. lasers and/or modulators, for generating optical signals for optically addressing a qubit and/or to form optical qubits. To enable execution of a quantum application by the quantum communication system, a control module may be used that is configured for collectively controlling the optical control elements of the quantum communication system in accordance with the program steps of the quantum application. It is noted that although the examples in this disclosure relate to optical quantum comprusing systems, the embodiments are not limited thereto. The control modules and data processing schemes may also apply to fast, real-time processing of quantum comprising systems that are based on superconducting or semiconductor qubits and require real-time processing of analog pulse signals.

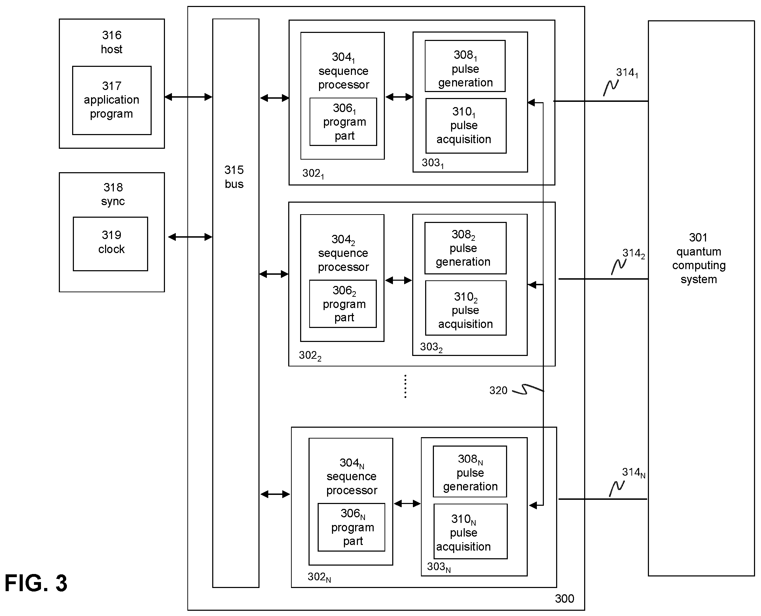

**Fig. 3** depicts a schematic of a control module for controlling a quantum system according to an embodiment. As shown in the figure, the control module may comprise a plurality of input-output (IO) data processing channels **302_{1-N}** (in short channels) connected to the quantum computing system **01,** e.g. a quantum communication system. The control module may be implemented as one or more digital circuits such as application specific integrated circuits (ASICs), one or more field programmable gate arrays (FPGAs), and/or one or more microprocessors.

Each channel **302_{1-N}** of the control module may include a sequence processor **304_{1-N}** connected to a pulse processing module **303_{1-N}** which in turn is connected to an input/output (IO) terminal **314_{1-N}** (in short a terminal). Each pulse processing module may include a pulse generation module **308_{1-N}** and a pulse acquisition module **310_{1-N}**. This way, a sequence processor may configure the pulse processing module as a pulse generation module for generating pulse signals at the output of the channel to control specific elements, e.g. detectors and/or transmitters, of the quantum computing system. Similarly, a sequence processor may configure the pulse acquisition module to process analog pulse signals, e.g. the output of a detector such as a photodetector, originating from the quantum computing system.

The sequence processor of each channel may be communicatively connected to each other via a data bus **315.** Further, a host computer **316** may be connected to the data bus to provide different program parts **306_{1-N}** of a quantum application **317** to different sequence processors. A clock signal **319** generated by a synchronization module **318** may be used by the sequence processors to synchronize the execution of the program parts by the different sequence processors. To enable real-time processing of multiple analog pulses, the pulse processing modules of the different channels may be directly connected to each other to realize high speed interconnects **320** that form direct data paths between the different channels. These direct data paths may connect different pulse acquisition modules of different channels within a control module. This way, measurement results, e.g. counted and/or timetagged pulses (events), determined at a first clock cycle by pulse acquisitions modules of different channels of the control module may be shared in real time with one or more further channels of the control module which may processes the measurements at a second clock cycle. Here, real-time data processing refers to data operations that can be executed within one or a few clock cycles.

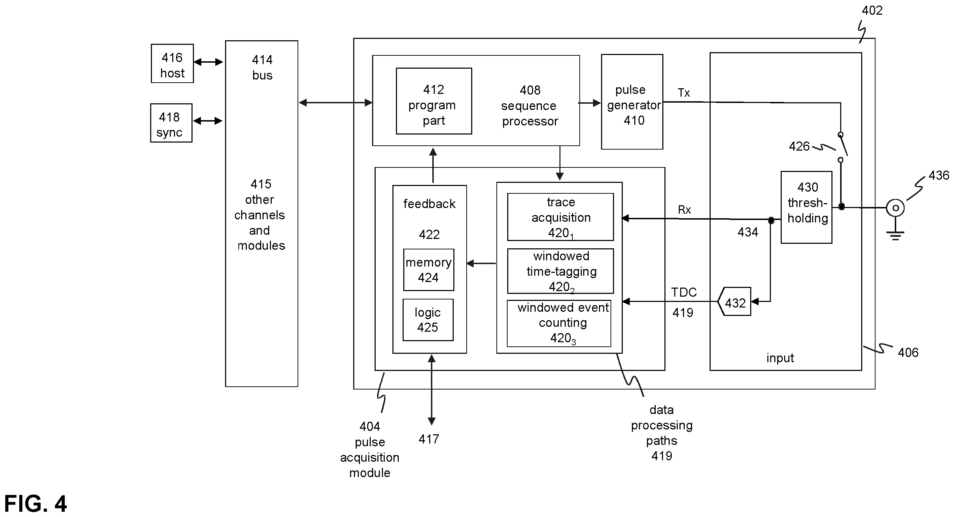

**Fig. 4** depicts a more detailed schematic of an I/O data processing channel of a control module according to an embodiment. In particular, the figure depicts a channel **402** comprising a sequence processor **408** which is configured to control a pulse acquisition module **404,** a pulse generator module **410** and a programmable analog front-end module **406.** The channel may be further connected via a bus **414** to other control modules, a host computer **416** and a synchronisation unit **418.** In a typical setup, the control module may be part of a plurality of control modules to control the execution of a quantum application on a quantum computing system. Here, the host computer may control the execution of a quantum application by compiling the quantum application in to different program parts and distributing the program parts to different channels wherein each channel is configured to independently execute a program part to control processing of pulses at a terminal **436.** The host computer may be configured to trigger autonomous and synchronized execution of the program parts by the sequence processors wherein - during execution - the different channels may process pulse signals originating from the quantum computing system or generate pulse signals for transmission to the quantum computing system. Hence, during execution of the program parts, the sequence processors of the control module are in control of executing the quantum application on the quantum computing system. Once the program parts have been executed, the control is provided back to the host computer.

The channel may be configured to receive synchronization information from a synchronisation unit **416** which allows the data processing channel to synchronize a clock so that it is synchronized with other data processing channels of the control module. The program part may include a sequence of operations that the sequence processor is able to interpret and execute. In an embodiment, the sequence of operations may include one or more operations for configuring the channel as a pulse signal generator **410.** When programmed as a pulse signal generator, a direction switch **426** may connect the terminal **436** with pulse generator module **410.** In that case, the terminal **418** is configured as a signal output stage for the channel (which in that case is configured as an output channel).

In a further embodiment, the sequence of operations may include one or more operations to configure the channel as a pulse acquisition module. In that case, the terminal may be configured as an input stage for the channel (which in that case is configured as an input channel). When programmed as a pulse acquisition module, the direction switch **426** is open so that the terminal is connected to the pulse acquisition module.

When programmed as a pulse acquisition module, the analog front-end module may process an analog input signal **418** provided to the input terminal and provide one or more processed signals to one or more data processing paths **419** of the pulse acquisition module. Each data processing path may include a set of logic blocks configured to perform a certain data processing function. These logic blocks may include one or more more digital circuits such as application specific integrated circuits (ASICs), one or more field programmable gate arrays (FPGAs), and/or one or more microprocessors.

The analog front-end may include an input thresholding unit **428,** e.g. a threshold comparator, to threshold pulses (events) in the analog pulse signal to produce a thresholded analog pulse signal **434.** In an embodiment, the thresholding unit may be programmed to use one or more thresholds. The thresholded analog pulse signal may be provided to a time-to-digital converter **422** (TDC) to timetag events and/or pulses in the thresholded analog pulse signal. Hence, the TDC may determine a timetag signal **419** that is associated with the thresholded analog pulse signal, wherein the timetag signal may include a sequence of timetags.

Hence, as shown in the figure, when configured as an input stage, an analog signal at the input terminal may be processed by the analog front-end module to generate a thresholded analog pulse signal comprising thresholded events, typically pulses, and an associated timetag signal indicative of a time for each of the threshold analog pulses. Here, the analog pulse signal may be a signal originating from a detector, e.g. a photodiode, which can detect optical signals, e.g. single or few photon signals, and transform these optical signals into an analog pulse signal.

The thresholded analog pulse signal and the associated timetag signal may be input to one or more data processing paths **419** of the pulse acquisition module, which are controlled by the sequence processor. In an embodiment, the data processing paths may include a trace acquisition path **420₁**, which is configured to sample the input signals at a predetermined sampling rate, typically 1Gsps.

In an embodiment, the data processing paths may include a logic block that is configured as a windowed timetagging path **420₂**. The logic block may be configured to receive information of an accurate time window in which timetag events from the timetag signal can be gated. The time window may be defined based on a window start time and a window end time. The time window may be set by the sequencer, e.g. when executing the program part. The windowed timetagging path is configured to process a timetag, including checking if the timetag is positioned (occurs) within the time window. This way, zero, one or a plurality of timetags can be detected by the windowed timetagging path and stored in a memory **424.** In an embodiment, the windowed timetagging path may also be configured to count the number of timetags that are detected within the time window. The counted number of timetags (zero, one or a plurality) may be stored as a timetag count value in the memory.

Further, the stored time tags and/or counted time tags may be processed using a logic module **425.** In an embodiment, the logic module may be configured to apply logic operations to the measured results stored in the memory. A feedback connection **422** may be used to share the stored results or the results processed by the logic module of the windowed timetagging path with the sequence processor of the channel. The sequence processor may use these results when executing further operations of the program part. Alternatively, and/or in addition, the sequence processor may share the results of the windowed time-tag path with one or more further channels of one or more control modules that are used to control the quantum system. Further, in an embodiment, the results of the windowed time-tag path may be shared with other channels of the control module. A direct data path **417** may be used to share the results with other channels.

In a further embodiment, the data processing paths may include a logic block that is configured as a windowed event counting path **420₃**. A time window defined by the sequencer may determine thresholded input events of the thresholded analog pulse signal **434** that are counted by the windowed event counting path. Hence, the windowed event counting path is configured to count pulses that have an amplitude above a certain threshold value. Thresholded pulses that occur within the time window are counted. This way, zero, one or a plurality of pulses can be determined by the windowed event counting path. This counted number of pulses may be stored as a pulse count value in a memory.

At end of the time window, a logic block of the windowed event counting path may be configured to process the counted pulses based on one or more threshold count values. These values may be set by the sequencer executing the program part. For example, the logic block may determine if the pulses counted within the time window is larger and/or smaller than a predetermined value. The thus thresholded count value may be stored in the memory **424** and used by logic module **425** to combine these results with other count values measured by other channels of the control module. In particular, the logic module may use the measured results to compute a state of the quantum system real-time. The logic module may receive the thresholded count values from other channels via interconnects that provide a high-speed direct data path **417** between the different pulse acquisition modules of the control module.

In an embodiment, the logic block **425** may include a programmable look-up table to compute state information associated with the quantum computing system based on real-time measured event counts and/or timetags from different channels. Thus, when executing an operation of a program part, the sequence processor may execute multiple cycles of windowed event timetagging and/or event counting in a fast feedback loop until the sequence processor determines that a certain condition, e.g. a certain state, has been determined.

Hence, a sequencer-controlled channel of a control module as described with reference to **Fig. 3** and **4** is configured to perform windowed timetaging and windowed event counting for a thresholded analog pulse signal and to determine state information of a quantum computing system in real-time (i.e. within one or a few clock cycles) by combining measured timetags and/or event counts of one channel with timetags and/or event counts determined by other channels of the control module. The state information may be used by the sequencer of the control channel to perform a further operation, e.g. configure a channel of the control module to send out a particular pulse at a certain time instance, a certain width and a certain amplitude; and/or, to configure a channel of the control module to measure within a time window pulses and/or events originating from the quantum system.

In further embodiments, multiple control modules as depicted in **Fig. 3** and **Fig. 4** may be connected together (e.g. via a high-speed data connection) to form a system for controlling a quantum computing system. This way, state information and/or timetags determined by a channel of a control module may be shared as feedback information with one or more sequence processors of one or more further control modules that control the quantum computing system.

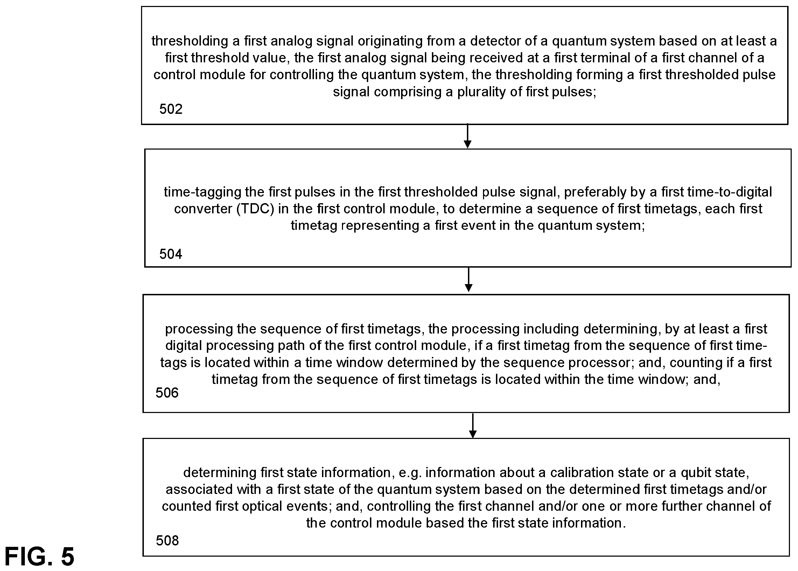

**Fig. 5** depicts a flow diagram of processing signals associated with a quantum computing system according to an embodiment. The quantum computing system may be controlled by a plurality of channels of one or more control modules, wherein each channel is controlled by a time-synchronized sequence processor. The clock signal may provide a general time-base for the processes executed by the control modules.

As shown in the figure, the method may start (step **502**) with thresholding a first analog signal originating from a detector of the quantum system based on at least a first threshold value. The first analog signal may be received at a first terminal of a first channel of the plurality of channels of the control modules to form a first thresholded analog pulse signal comprising a plurality of first pulses.

Further, the first pulses in the first thresholded analog pulse signal may be timetagged (step **504**). In an embodiment, a time-to-digital converter (TDC) in the first channel may be used to timetag the first pulses. This way, a sequence of first timetags may be determined, wherein each first timetag represents a first event in the quantum system. In an embodiment, the timetagging of the first pulses may be determined based on the clock signal that is used to synchronise the sequence processors.

The sequence of first timetags may be processed by the first channel (step **506**). In an embodiment, the processing of the first timetags may include determining, by at least a first digital processing path of the first control module, if a first timetag from the sequence of first timetags is located within a time window. Here, the time window may include a window start time and a window end time, which is based on the time as defined by the clock. In an embodiment, the sequence processor may define the start and end time of the time window. In a further embodiment, the processing of the first timetags may include counting one or more first timetags from the sequence of first timetags located within the time window.

In a further step **508,** first state information, e.g. information about a calibration state or a qubit state, associated with a first state of the quantum computing system may be determined based on the first timetags and/or counted first optical events within the time window. The first sequence processor may control the first channel based on the first state information. For example, it may use the state information to configure the first input of the first channel to receive a second analog signal from the detector. Alternatively and/or in addition, one or more further channels of the control module may be controlled based on the first state information. To that end, the state information may be shared with the one or more further channels via a direct data path that connects the channels of the control module.

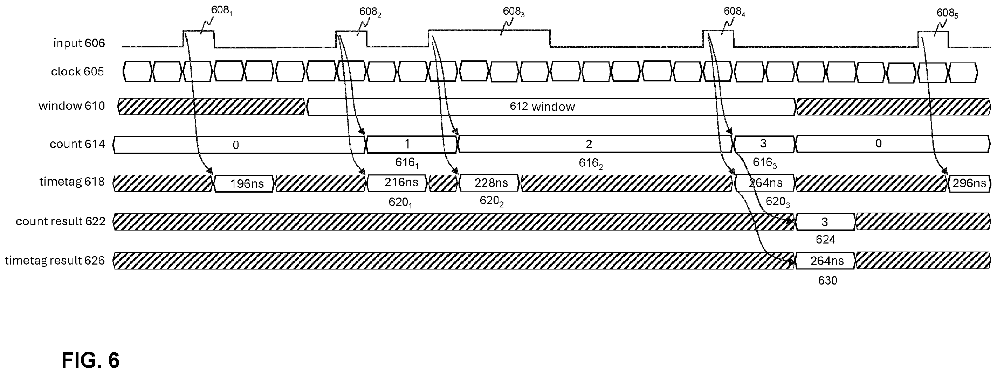

**Fig. 6** depicts a timing diagram illustrating processing of an analog pulse signal by a channel of a control module for controlling a quantum computing system according to an embodiment. In particular, the figure shows a timetrace of a thresholded analog pulse signal **606** comprising a plurality of pulses **608₁₋₅**, which may be provided to the input of different data processing paths of the channel. A clock signal **605** may provide a time basis for the thresholded analog pulse signal **606** and the processes executed by the channel.

As explained with reference to **Fig. 3****,** the sequence processor may generate a time window signal **610** that is synchronized with the timeline of the timetrace. The time window signal may define a time window **612,** including a window start time **613₁** and a window end time **613₂**. The time window may be used by the logic of the channel to determine which pulses **608₁₋₅** in the timetrace of the thresholded analog pulse signal need to be processed by the different data processing paths. Further, pulses in the thresholded analog pulse signal may be timetagged to produce a timetag signal **618** indicating timetags **620₁₋₃** associated with pulses in the thresholded analog pulse signal. The timtags may for example be determined by a time-to-digital converter (TDC) in the channel. In an embodiment, a timetag may be associated with a position of an edge, e.g. a rising edge, of a pulse within the time window.

A first data processing path may be configured to process the timetags, including determining (identifying) timetags located within the time window. The identified timetags may be processed based on predetermined logic blocks, e.g. to determine the first or last timetag within the time window. Timetag result signal **626** may identify the result of the processing of the identified timetages, in this example the last timetag **624** within the time window. This timetag may be stored in a memory as the result of the processing of the timetags within the time window by the first data processing path.

Pulses may be counted by the channel based on the identified timetags within the time window and/or based on thresholding the amplitude of the analog signal as explained with reference to **Fig. 3** and **4****.** A count signal **614** may be generated identifying count events **616₁₋₃** triggered by a signal threshold event in the time window (i.e. a detection of a pulse with an amplitude larger than a threshold value) or a timetag identified in the time window. A count signal **614** indicative of the counted number pulses within the time window may be generated. This value may be stored in a memory or a lookup table and processed based on predetermined logic. For example, in an embodiment, the processing of the counted number of pulses may include a comparison with a count threshold value.

The results produced by the processing paths of the channel may be used to determine state information associated with the quantum system, for example a quantum state of a qubit of a photonic quantum system. This state information may be used by a control module to perform a next step in the execution of a quantum application, e.g. a QKD protocol or a quantum repeater protocol, to further control the control module, e.g. prepare acquisition of a further, second timetrace of a thresholded analog pulse signal. Alternatively and/or in addition, the state information may be shared with one or more further control channels of the plurality of control channels of the one or more control modules that are used to control the quantum computing system. For example, the state information may be shared with one or more further channels of the control module so that the sequence processors of these channels can use that information in the execution of the quantum application.

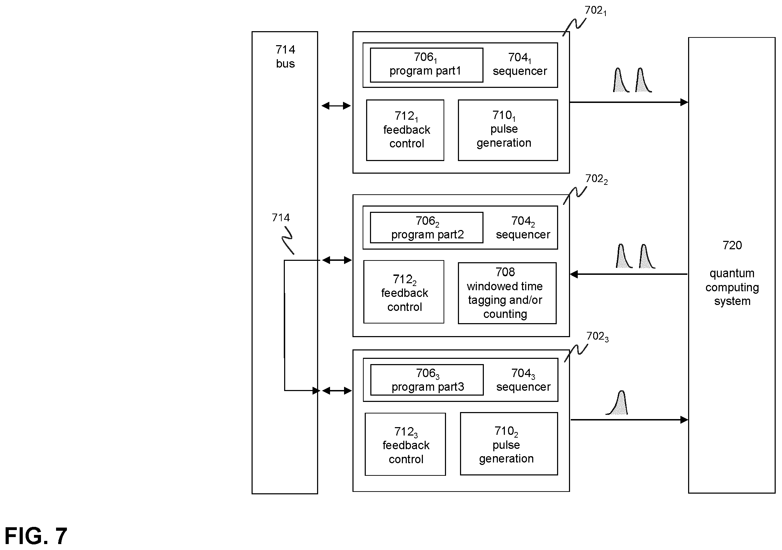

**Fig. 7** depicts a plurality of channels for controlling a quantum system according to an embodiment. This figure illustrates the processing of a thresholded analog pulse signal by a first channel **702₂** of the plurality of channels **702₁₋₃** that is used for controlling a quantum computing system **720** and the subsequent operation of a second channel of the plurality of channels based on for example feedback information associated with the processing of the thresholded pulse signal provided by the first channel.

In this scheme each of the sequence processors of the channels may execute program parts of a quantum application based on a common timeline provided by a clock as explained with reference to **Fig. 3-5** above. The pulse processing modules of the first channel **702₁** and third channel **702₃** may be configured as pulse generators and the pulse processing module of the second channel **702₂** is configured as a pulse acquisition module which may be configured to process an analog pulse signal originating from the quantum computing system, including windowed timetagging and/or windowed event counting.

In this example, the first channel may send out a pulse signal to the quantum computing system, while the second channel may receive a pulse signal from the quantum computing system. Based on the processing of the analog pulse signal, the second channel may compute state information, e.g. a state of a qubit of the quantum computing system, and share it as feedback information with other channels, such as the third channel. The third channel may use the state information shared by the second control module to send a pulse signal to the quantum system. Alternatively and/or in addition, the state information may be shared real-time by between the channels using direct data paths between the channels as explained with reference to **Fig. 3** and **4****.**

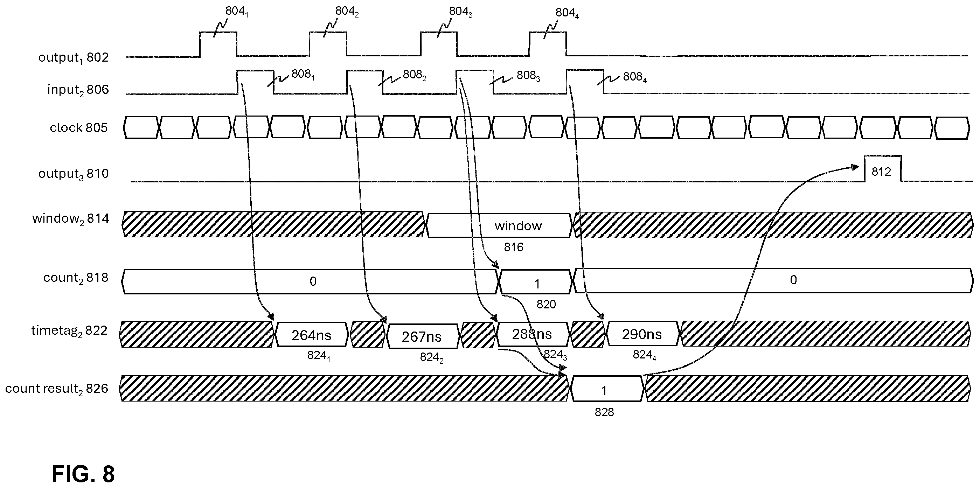

**Fig. 8** depicts a timing diagram illustrating processing of an analog input signal by a channel of a control module for a quantum computing system according to an embodiment. As shown in this figure, a first channel of the control module may be configured as a pulse generator and generate a first output signal **802** including a plurality of pulses **804₁₋₄** at its output. The first output signal may be used for example to control an optical transmitter of the quantum computing system to transmit a plurality, in this case four, optical pulses to the quantum computing system.

A second channel of the control module may be configured as a pulse acquisition module, which may receive an analog input signal at its input, which may be a response signal, e.g. a detector signal, originating from the quantum computing system in response to the transmitted pulses. The second channel may threshold the analog input signal to produce a timetrace of a thresholded analog pulse signal **806** comprising a plurality of pulses **808₁₋₄.** This thresholded analog pulse signal may be provided to the input of different data processing paths of the second channel. A clock signal **805** may provide a time basis for the input and output signals and the processes executed by the channel.

Similar to the timing diagram of **Fig. 6****,** the thresholded analog pulse signal **806** may be timetagged to produce a timetag signal **822** indicating timetags **824₁₋₄** associated with pulses in the thresholded analog pulse signal **804.** The timetags may for example be determined by a time-to-digital converter (TDC) in the second channel.

A time window signal **814** may define a time window **816,** including a window start time and a window end time, which may be used by the logic of the channel to determine which pulses **608₁₋₄** in the timetrace of the thresholded analog pulse signal **806** need to be processed by the one or more data processing paths of the second channel.

The time window may be used by a first data processing path of the second channel to identify which of the timetags need to be processed by the channel. In this example, the time window signal indicates that one timetag **824₃** out of the sequence of timetags **824₁₋₄** is located within the time window.

The second channel may be configured to count pulses based on the identified timetags within the time window and/or based on thresholding the amplitude of the analog input signal. A count signal **818** may be generated which identifies - in this example - one counting event **820** triggered by a signal threshold event in the time window (i.e. a detection of a pulse with an amplitude larger than a threshold value) or a timetag identified (occurring) in the time window. The count signal **818** determines one signal pulse within the time window, so that after the time window the count result signal **826** indicates that one pulse has been counted. This value may be stored in a memory or a lookup table and used to determine state information. The state information may be determined by processing the count values, e.g. by comparing the count result with a count threshold value, and, optionally, combining it with other count results determined by other channels. The state information may be shared with sequence processors of other channels of the control module, which use this information to execute a further operation. For example, in **Fig. 8****,** the state information based on the count results as determined by the second channel, may be used by a third channel of the control module, which is configured as a pulse generator. Based on the state information, the third channel may produce a pulse signal **810** at its output including a single pulse **812** of a certain duration and amplitude.

The control module as described with reference to the embodiments in this disclosure may be used in complex quantum system setups. For example, the control module may be used to execute a complex protocol for a quantum computing system, e.g. a quantum repeater system comprising a repeater node connected to two nodes A and B as described with reference to **Fig. 1** and **2****.** In that case, multiple channels of a control module may execute parts of a quantum application in a synchronized way. Depending on the task that each channel has to perform, a channel may be configured as a pulse generator or pulse acquisition module. Pulses identified by a pulse acquisition module in a time window may be used to determine state information associated with the quantum system.

The state information may be used by the sequence processor of the second channel when executing operations of the program part, it may be shared with other channels via a direct data path between the channels of the control module; and/or, it may be shared with one or more sequence processors of the control module or one or more sequence processor of one or more further control modules that are used to control the quantum computing system.

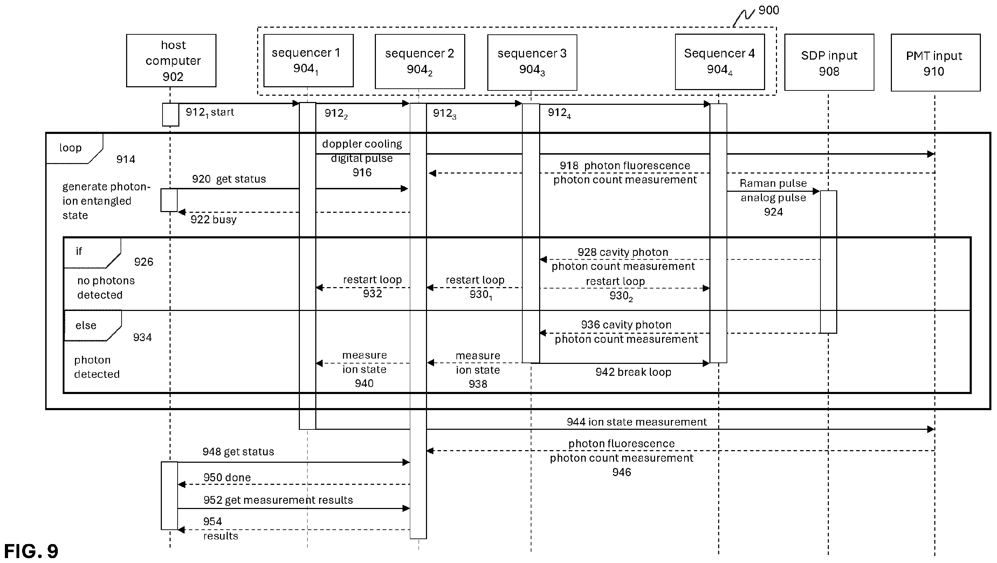

**Fig. 9** depicts an exemplary implementation of a method for controlling a quantum repeater using a control module according to an embodiment. As explained with reference to **Fig. 3****,** the control module **900** may include a plurality channels, wherein each channel may include a sequence processor **904₁₋₄** connected to a pulse processing module which in turn is connected to an input/output (IO) terminal.

A host computer **902** may be configured to distribute program parts of a quantum application to the sequence processors, which control the channels of the control module. The quantum application may include a protocol for controlling photon entanglement processes by the quantum repeater. Each sequencer-controlled channel **904₁₋₄** may be connoted to an optical element, e.g. a detector or transmitter, of the quantum repeater. Further, the host computer may send notifications **912₁₋₄** to the sequencers **904₁₋₄**, e.g. a notification to start the execution of the program parts by the sequence processors. At the start of the protocol, the control module may be synchronized based on synchronization information so that all sequencers of the module and, optionally, sequencers of other (external) control modules are synchronized.

As shown in the figure, the protocol may include a conditional main loop **914** in which the optical elements of the quantum repeater are controlled to distribute a photon-ion entangled state to nodes A and B. Due to the probabilistic nature of this process, typically a number of attempts are needed before such entangled state is successfully generated.

The protocol may start with a first sequence processor of the first channel of the control module triggering a Doppler cooling process (step **916**) which may include generation of a digital pulse signal **916** at its output for generating single photons. This signal is detected by an optical detector **910,** in this case a photomultiplier tube (PMT). The analog pulse signal produced by the PMT, representing single photon detection events, is the input signal for the second channel of the control module **904₂**, which is configured to count the photons (measurement step **918**).

When the protocol is started, all channels are busy. The host computer may query the status of the different channels while the protocol is executed. The channels will report a "busy" status until the final operation of the protocol (final measurement **946** has been executed). Further, a precisely shaped Raman pulse may be generated by driving an acousto-optical modulator (AOM) with an analog pulse **924** generated by sequencer **904₄** controlling a channel that is configured as a pulse generator.

A cavity photon generated in response to the Raman pulse may be detected by a single photon detector (SPD). The signal of the SPD may be the input signal for a third channel controlled by sequencer **904₃** which is configured to count the number of detected cavity photons (measurement step **928**) and to share the counted number of cavity photons with the other channels of the control module. If no cavity photons are counted by the third channel in response to the Raman pulse, then the sequence processors will restart the main loop **914** with a further Doppler cooling digital pulse (step **916** and further). Else, if cavity photons are counted by the third channel (step **934**) then the sequence processors will aboard the main loop and prepare the first control module for initiating a measurement of the ion state. The ion state measurement will include detection of photons by the PMT and counting of photons by the second channel based on the pulse signal generated by the PMT (step **946**). After successful measurement of the ion state, the sequencer of the second channel may set its status to done, so that the host computer knows that it can retrieve the measurement results by a status inquiry (step **948**). If a done status is returned, it may request the measurement results from the second control module, which - in return to the request - will send the measurement results to the host computer. Thereafter, control is given back to the host computer.

The method depicted in **Fig. 9** shows that the sequencer-controlled channels of a control module according to the embodiments in this disclosure allow autonomous execution of a complex protocol for a quantum computing system, such as a quantum repeater, which may include a repeat until success sequence. No interaction between the host and the control module is required thereby providing a substantial increase in speed of execution of the protocol and ease of use. The sequencer-based control modules provide easy, fast and reliable control of quantum applications that include complex optical quantum processes.

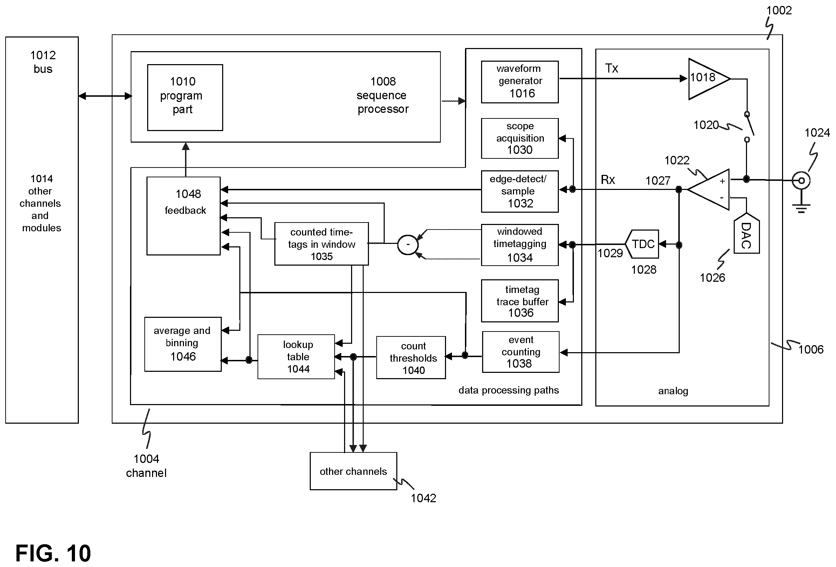

**Fig. 10** depicts a schematic of a channel of a control module for controlling a quantum computing system according to a further embodiment. In particular, the figure provides a more detailed illustration of a channel **1004** of a control module as described with reference to **Fig. 4****.** The channel **1004** may be controlled by a sequence processor **1008** and comprise a plurality of data processing paths **1030-1028.** The channel may have an analog front end **1006** including a terminal **1024** which can be configured as an input terminal for receiving signals from the quantum processor or as an output terminal for sending signals to the quantum processor.

The sequence processor **1008** may programmatically sequence real-time commands or operations of a program part **1010** that trigger operations in different logic blocks of the channel. For example, the sequence processor may configure the analog front end as an output stage for waveform generator **1026** for sending pulses to the quantum computing system. To set the analog front end as an output, the sequence processor may control the output switch **1020** to be closed.

Alternatively, the sequence processor may configure the analog front end as an input stage for receiving analog signals originating from the quantum computing system. In that case, the output switch may be open so that an input signal can be processed by a thresholding circuit. In an embodiment, the thresholding circuit may include a threshold comparator which is configured to receive an analog input signal **1024** and a threshold signal **1026** at its input and to generate a thresholded analog pulse signal **1027** comprising one or more pulses at its output. In an embodiment, the thresholded analog pulse signal may be timetagged by a time tagging module **1028,** which is configured to receive the thresholded analog pulse signal at its input and to output a timetag signal comprising sequence of timetags associated with pulses in the thresholded signal. The time-tagging module may be a time-to-digital convertor (TDC).

The thresholded analog pulse signal and the timetag signal may be provided to different data processing paths of the channel. The sequence processor **1008** may control these data processing paths programmatically in a deterministic and real-time manner. The sequence processor may be synchronized with sequence processors of other channels of the control module and/or sequence processors external to the control module. The sequence processors may operate in union using a suitable synchronisation process, e.g. a synchronization process as described with reference to US117,47,854 which may hereby be incorporated by reference into this application to control the channels of one or more control modules controlling a quantum computing system in a synchronized way.

A scope acquisition logic block **1030** and an edge-detect/sample logic block **1032** may be configured to sample the thresholded analog pulse signal comprising one or more pulses. This way a time trace of the threshold signal may be determined and temporally stored in a memory. Further, the timetag signal produced by the time tagging module may be stored in a timetag trace buffer **1036.**

Further data processing paths may include logic blocks **1034** that are configured to perform windowed time-tagging and logic blocks **1038** that are configured to perform windowed event counting. These data processing paths may use a predetermined time window which may be controlled by the sequence processor.

The windowed time-tagging processing path may include a logic block **1034** that is configured to identify one or more timetags associated with pulses (events) in the threshold input signal that occur within a time window. The time window may include a window start time and a window end time, wherein time is determined based on a clock that is common to all channels of the one or more control modules that control the quantum computing system. Either absolute timetages or relative timetags (e.g. relative to the window start time) associated with detected pulses may be determined.

The windowed time-tagging processing path may further include a logic block **1035** that is configured to count timetags that occur within the time window. Information about the timetags within the time window and the number of timetags within the time window may be stored in a programmable lookup table. Further, this information may be provided as feedback information **1048** to the sequence processor **1008** that controls the channel and/or this information may be shared with other channels **1042** of the control module via a direct data path.

Similarly, the event counting processing path may include a logic block **1038** that is configured to count the number of thresholded pulses **1040** detected within the time window. The counted number of threshold pulses may be compared with a count threshold value **1040.** This way, the logic block can check if the counted number of thresholded pulses in the time window is smaller or large (or equal) to the count threshold value. If the counted number of thresholded pulses meets the condition associated with the count threshold value, the result may be stored as a threshold count value in a programmable lookup table **1044.** The lookup table may be configured to process the threshold count values together with threshold counts values determined by one or more other channels **1042.** Averaging and binning operations **1046** may be executed to enable statistical analysis on the measured results. Further, the results computed by the programmable lookup table may be provided as feedback information **1048** to the sequence processor.

More generally, the results produced by the edge-detect/sample logic block **1032,** the windowed timetagging logic block **1034,** the windowed timetag counting logic block **1035** and windowed event counting logic block **1038** may be provided as feedback information **1048** to sequence processor **1008** of the control module or to sequence processors of other channels of the control module and/or sequence processors external to the control module. Moreover, the counted timetags **1035** that occurred within a time window and the thresholded countvalues that occurred within a time window can be shared between channels **1042** via direct data paths. The feedback and the direct sharing of measured results between different channels allow real-time execution of applications in which any sample, timetag or event count acquisition results acquired by one channel of the control module may be used by one or more further channels of the control module and/or sequence processors external to the control module. This allows running calibration, repeat-until success (for example entanglement generation) and conditional feedback algorithms in real-time, i.e. without the system relinquishing control back to the host computer, which provides a significant speed up of the overall execution of the quantum application.

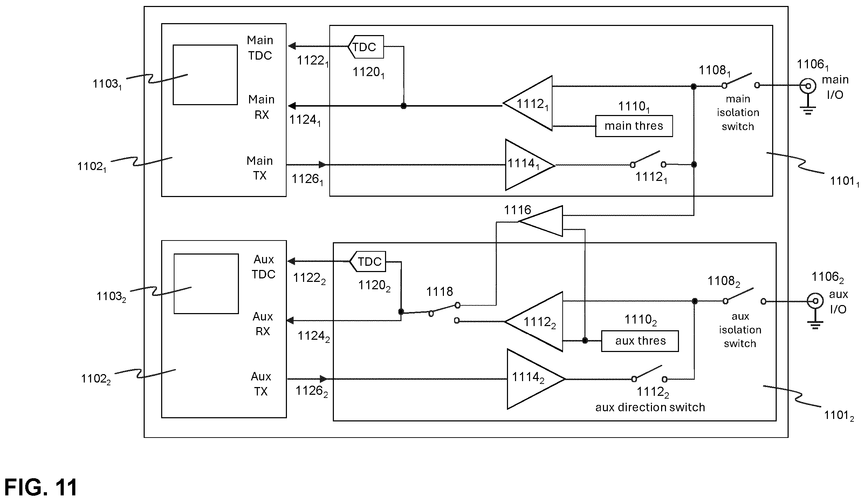

**Fig. 11** depicts a schematic of part of a control module for controlling a quantum system according to a further embodiment. The figure depicts a more detailed view of the analog front end **1101₁** of a first, main terminal **1106₁** and the analog front end **1101₂** of a second, auxiliary terminal **1106₂**, may be paired. In particular, the figure illustrates that the processing of a first analog signal provided to a first terminal **1106₁** of a first channel **1102₁** of the control module may be paired with the processing of a second analog signal provided to a second terminal **1106₂** by a second channel **1102₂** of the control module, wherein each channel **1102_{1,2}** may be controlled by a sequence processor **1103_{1,2}**.

Similar to the channel illustrated in **Fig. 10****,** the main and auxiliary analog front ends may both include a thresholded input **1124_{1,2}**, a TDC input **1122_{1,2}** and a pulse signal output **1126_{1,2}**. A dual-analog-threshold channel combine switch **1118** is configured to combine two separate channels to process an input signal that is provided the main terminal. This way, a three-state input logic may be defined based on a first (main) threshold value **1110₁** and a second (auxiliary) threshold value **1110₂**, which is connected via comparator **1116** and the dual-analog-threshold channel combine switch **1118** to the auxiliary channel **1102₂**. Such three-state input logic configuration may be used to discriminate between three events, e.g. single photon, multiple photon and invalid detection events. The three-state input logic may be implemented throughout the entire channel. Additionally, in an embodiment, when channel-combined, the second channel can remain functional in output mode by closing auxiliary direction switch **1112₂** and auxiliary direction switch **1108₂**.

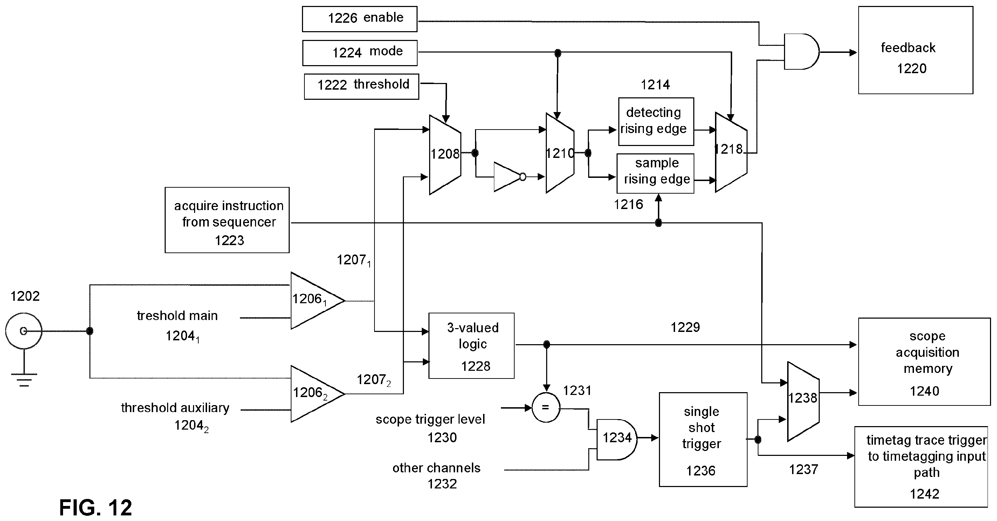

**Fig. 12** depicts an example of an edge-detect/sample processing path according to an embodiment. In particular, the figure shows the edge-detect/sample processing path, which operates on an thresholded analog input signal and is responsible for the trace acquisition of this thresholded analog signal . Input terminal **1102** may receive an analog pulse signal which is processed by one or more thresholding circuits **1206_{1,2}**, including a main thresholding circuit **1206₁** set at a main threshold value **1204₁** and, optionally, an auxiliary thresholding circuit **1206₂** set by an auxiliary threshold value **1204₂**. The auxiliary threshold circuit may be used in case the input terminal **1202** is configured to operate in the dual-analog-threshold channel combine mode as described with reference to **Fig. 11****.** The thresholded signals **1207_{1,2}** at the output of the thresholding circuits may be processed by a logic block **1228,** e.g. a three-valued logic block, to provide a sampled trace signal **1229** of the thresholded signals. The sampled trace signal may be stored into a memory **1240.** In an embodiment, the trace signal stored in the memory may be shared with other channels of the control module so that these channels have access to the sampled trace signal.

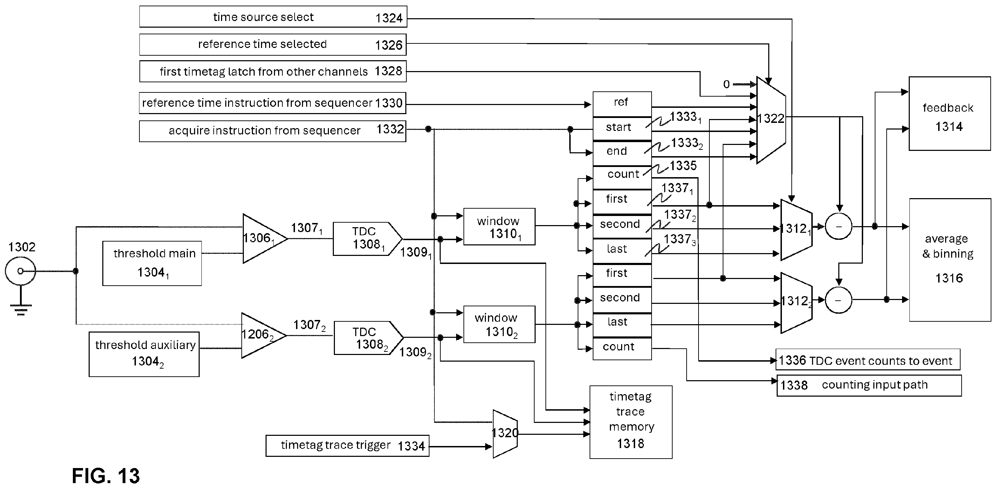

The sampling of the trace signal may be triggered by an acquire instruction **1223** from the sequencer. Alternatively, in another embodiment, the sampling of the trace signal may also be triggered by setting a scope trigger level **1230** like one might do for a logic analyzer or oscilloscope, which may be compared **1231** with the trace signal. The scope level trigger level may be combined with other information from other channels **1232** of the control module and fed into a single shot trigger logic block **1236,** which is configured to generate a trigger signal **1237** that triggers the sampling of the trace signal. In an embodiment, the trigger signal may be sent to a windowed timetagging processing path **1242** to trigger a timetag trace acquisition that stores a time trace of timetags in a memory as illustrated in **Fig 13****.**

When enabled **1226,** the acquire instruction **1223** may also trigger detection **1214** of a rising-edge of a pulse in the one or more thresholded signals, and, optionally, sampling **1214** of such detected rising-edge. In that case, information about the detected and/or sampled rising edge may be provided as feedback information to one or more sequence processors of the control module or to one or more sequence processors of other control modules and/or sequence processors external to the control module.

**Fig. 13** depicts an example of a timetagging processing path according to an embodiment. In particular, the figure shows the timetagging processing path, which operates based on the timetags produced by time-to-digital circuits (TCDs) **1308_{1,2}** and produces a timetag trace and windowed timetag acquisitions, i.e. timetags that occur in a time window.

Input terminal **1302** may be configured to receive an analog pulse signal which is processed by one or more thresholding circuits **1306_{1,2}**, including a main thresholding circuit **1306₁** set at a main threshold value **1304₁** and, optionally, an auxiliary thresholding circuit **1306₂** set by an auxiliary threshold value **1304₂**. The auxiliary threshold circuit may be used in case the input terminal **1302** is set to operates in the dual-analog-threshold channel combine mode as described with reference to **Fig. 11****.** In the dual-analog-threshold channel combine mode, the timetags associated with the auxiliary input can be processed in parallel to the timetags associated with the main input. The timetags associated with the auxiliary input may also be used as a reference which can - for instance - help to discriminate between single photon, multiple photon or invalid detection events.

The thresholded signals **1307_{1,2}** at the output of the thresholding circuits may be processed by the time-to-digital circuits (TCDs) **1308_{1,2}**, which are configured to produce a timetag signal **1309_{1,2}** based on the thresholded signals. Each of the timetag signals (typically a sequence of timetags) may be provided to a time window module **1310_{1,2}**. The time window module may include a logic block that is configured to identify timetags that occur within a time window. Further, the time window module may include a logic block that is configured to count the number of timetags that occur within the time window.

The time window may be set by an instruction or operation **1332** from the sequencer. The time window may include a window start time **1333₁** and a window end time **1333₂.** A timetag trace trigger signal **1334** (as explained with reference to **Fig. 12**) may trigger a timetag trace acquisition of timetags **1309** so that a timetrace of timetags is stored in the memory of **1318. .** The one or more timetag signals may be stored in a timetag trace memory **1318** which may be shared with the other channels of the control module.

Hence, the acquire instruction **1332** from the sequencer may start the windowed timetagging process by setting the time window during which timetags generated by the TCDs are gated. If a timetag falls within the time window it is processed, wherein the processing may include storing specific timetags that fall within the time window and/or counting the number of timetags that occur within the time window.

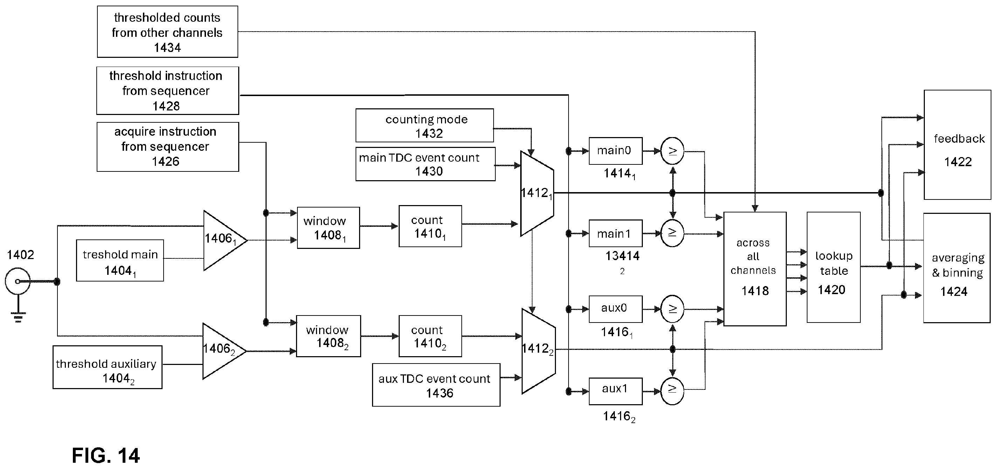

For example, a first, second and/or last timetag **1337**_{**1**-**3**} that occur(s) within a time window may be stored in a memory for further processing. Additionally, zero, one or a plurality of timetags that occur within the time window may be counted and the count value **1335** may be stored for further processing. For example, counted number of timetags in a time window may be shared via a direct data path with other channels **1335** of the control module. Further, the counted number of timetags in a time window may be shared with an event counting process path **1336** of the channel as e.g. described below with reference to **Fig. 14****.**

At the end of the time window, one of the measured timetags **1337**_{**1**-**3**} may be selected based on the time source select message **1324.** To that end, a first multiplexing circuit **1312_{1,2}** may be configured to receive the stored timetags and the time source select message **1324** so that it can select a timetag (e.g. the first, second or last timetag) from the stored timetags. A reference time may be used to determine a time relative to the time associated with the selected measured timetag.

In an embodiment, a reference time may be selected from a plurality of possible reference times. To that end, a second multiplexing circuit **1322** may be configured to receive different candidates for a reference time: a reference time **1330** from the sequencer, the start time **1333₁** of the time window, the end time **1333₁** of the time window or a time associated with a timetag from another channel **1328.** The second multiplexing circuit may further be configured to receive a reference time selection message **1326** indicating which reference time from the reference time candidates should be selected. The selected reference time may be subtracted from the time associated with the measured timetag to compute a relative time, i.e. a time relative to other time points in the experiment (e.g. for calibration purposes).

Alternatively, in a further embodiment, the reference time may also be set to zero ("0"), thereby determining that a time instance associated with timetag is absolute in time. In an embodiment, information associated with the absolute or the relative time may be averaged over multiple measurements and stored in a memory by the average and binning block **1316** . In an embodiment, information associated with the measured time may be provided as feedback information **1314** to sequencers of other channels of the control module and/or sequence processors external to the control module.

Any timetag or time reference that is used and/or processed by the timetagging processing path is based on a central time shared throughout the control system that controls the quantum computer. Each component in the control system has the same notion of time and therefore can handle timetags and associated time instances identically.

**Fig. 14** depicts an example of a windowed event counting processing path according to an embodiment. Like the edge-detect/sample processing path, it operates on the thresholded analog inputs.

Input terminal **1402** may be configured to receive an analog input signal which is processed by one or more thresholding circuits **1406_{1,2}**, including a main thresholding circuit **1406₁** set at a main threshold value **1404₁** and, optionally, an auxiliary thresholding circuit **1406₂** set by an auxiliary threshold value **1404₂**. The auxiliary threshold circuit may be used in case the input terminal **1402** is set to operates in the dual-analog-threshold channel combine mode as described with reference to **Fig. 11****.** In the dual-analog-threshold channel combine mode, the count produced by the auxiliary input can be processed substantially in parallel to the count from the main input and thus can be processed by the programmable the lookup table at the same time. This is useful to help discriminating between single photon, multiple photon and invalid detection events.

The thresholded signals **1407_{1,2}** at the output of the thresholding circuits may be may provided to a time window module **1408**_{**1,2**.,} which may receive information about a time window (e.g. a window start time and a window end time) via an instruction or operation **1426** of the sequencer. The time window module may include a logic block that is configured to count threshold events that occur within a time window. The output of the time window module may be an event count value **1410_{1,2}** representing the counted number of events that occurred within the time window.

Hene, the acquire instruction **1426** from the sequencer may the windowed event counting acquisition by setting the time window during which pulses (events) are gated. If an input pulse occurs during this time window, it is counted. At the end of the time window, the event count value may be compared with one or more count threshold values **1414_{1,2}**, **1416_{1,2}** that can be set using a dedicated sequencer instruction **1428.** The thresholded count values may be combined **1418** with thresholded count values **1434** from other channels and processed by programmable lookup table **1420** into state information, e.g. single binary value, which provides information about a state of the quantum computing system, e.g. a calibration state or a state of a qubit. This allows combining measurements (count values and/or timetags) of other channels (e.g. other photon detectors) to determine the state of the quantum system in real-time. Both the count value as well as the thresholded count values may be averaged over multiple multiple measurements and may be stored in memory using the averaging and binning block **1424.** Further, the state information and/or thresholded count values may be sent as feedback information **1422** to the sequence processor that controls the windowed event counting processing path or other sequencers of other channels of the control module and/or sequence processors external to the control module.

In an embodiment, count values (TDC count values) from the windowed timetagging processing path (as described with reference to **Fig. 13**) may be used instead of, or in combination with, the count values from the windowed event counting processing path. To that end, a multiplexing circuit **1412_{1,2}** may be configured to receive an event count value from the time window module and a TDC count value **1430.** The multiplexing circuit may further receive a counting mode message **1432** for selecting between TDC count values and event count values.

Using TDC count values instead of event count values may be advantageous in some situations because TDC count values are much more accurate due to the fact that the TDCs operate in a much finer timescale compared to the counting mechanism in the event counting input path (1/2048 ns vs. 1/128 ns timescale). As an example, due to the difference in timescale, an input event/pulse might still be detected and counted in the lower resolution time window of the event counting path, but the TDC might have reported that it is actually slightly outside of the time window. This would be considered a dark count (i.e. false positive detection). A disadvantage of the use of TDC count values is that TDCs have a much larger latency and lower retrigger rate, which makes them unsuitable for certain event counting applications. Therefore, the use of either count value is a trade-off between accuracy, retrigger rate and latency. The user can compare the count values from both input paths to detect discrepancies between the two as a validity check.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

## Claims

1. Method of processing signals associated with a quantum computing system, controlled by at least a control module comprising a plurality of data processing channels, each data processing channel being controlled by a sequence processor and including a timetag logic block, a timetag processing logic block, a pulse processing logic block and state computation logic block, the method including:
timetagging, by a first timetag logic block in a first data processing channel, one or more pulses of a first thresholded analog signal received at a first input terminal of the first data processing channel, to form a first timetag signal comprising one or more first timetags representing one or more first events associated with a first detector of the quantum computing system;
determining, by a first timetag processing logic block, one or more timetags in the timetag signal that occur within the first time window and a first timetag count value based on the one or more determined timetags; and/or, determining, by a first pulse processing logic block, one or more pulses in the thresholded analog signal that occur within the first time window and a first pulse count value based on the one or more determined pulses; and,
determining, by a first state computation logic block, first state information associated with the quantum computing system based the first timetag and/or pulse count value and based at least one further timetag and/or pulse count value determined by a further data processing channel of the plurality of data processing channels.

2. Method according to claim 1 further comprising at least one of:
controlling, by the first sequence processor, the first data processing channel based the first state information and/or based the one or more determined timetags;
sharing the first state information and/or the one or more determined timetags with one or more one or more further data processing channels of the plurality of data processing channels of the control module;
sending, by the first sequence processor, the first state information and/or the one or more determined timetags to one or more sequence processors of a further control module that is controlling the quantum computing system.

3. Method according to claims 1 or 2 further comprising:
comparing the first timetag and/or pulse count value with a count threshold value to determine a thresholded count value; and,
storing the thresholded count value in a memory.

4. Method according to any of claims 1-3 wherein the first state computation logic block includes a programmable look up table configured to apply one or more mathematical operations based on at least part of the first timetag and/or pulse count value and/or the least one further timetag and/or pulse count value.

5. Method according to any of claims 1-4 further comprising:
receiving a first analog signal originating from a detector associated with the quantum computing system;
providing the first analog signal to a first threshold module configured to threshold the first analog signal based on a first threshold value to form the first thresholded analog pulse signal.

6. Method according to any of claims 1-5 wherein the determining and counting, by the first timetag processing logic block, of the one or more timetags in the timetag signal is executed in parallel with the determining and counting, by the first pulse processing logic block, of the one or more pulses in the thresholded analog signal.

7. Method according to any of claims 1-6 wherein the determining, by the first timetag processing logic block, of the one or more timetags in the timetag signal further includes:
storing at least part of the timetags in a memory, each of the timetags being associated with a clock time instance determined based on a clock signal;
selecting a reference time instance; and,
computing a relative time instance for a stored timetag based on the reference time instance and the clock time instance,
preferably the reference time instance being selected from at least one of:
- a time instance associated with a start or end of the time window;
- a time instance determined by the sequence processor;
a time instance received from a sequence processor from one of the plurality of data processing channels

8. Method according to any of claims 1-7 wherein the first state information is shared via one or more direct data paths between the first data processing channel and the one or more further data processing channels of the control module.

9. Method according to claim 4, further comprising:
providing the first analog signal to a second threshold module configured to threshold the first analog signal based on a second threshold value to form the second thresholded analog pulse signal, the second threshold value being different from the first threshold value.

10. Method according to claim 9, further comprising:
determining, by a second timetag processing logic block, one or more timetags in the second timetag signal that occur within the second time window and a second timetag count value based on the one or more determined timetags; and/or, determining, by a second pulse processing logic block, one or more pulses in the second thresholded analog signal that occur within the second time window and a second pulse count value; and,
further determining the first state information based on the second timetag and/or pulse count value.

11. Method according to any of claims 1-10 wherein the sequence processors of the plurality of data processing channels are configured to execute different software parts of a quantum application, preferably the execution of the software parts by the sequence processors being synchronized.

12. A control module for processing signals associated with a quantum computing system, preferably the control module being implemented as one or more application specific integrated circuits (ASICs), one or more field programmable gate arrays (FPGAs), and/or one or more microprocessors, the control module comprising a plurality of data processing channels, each data processing channel being controlled by a sequence processor and including a timetag logic block, a timetag processing logic block, a pulse processing logic block and state computation logic block,
the module including: a processor, preferably a microprocessor, coupled to a computer readable storage medium having program code embodied therewith, wherein responsive to executing the program code, the processor being configured to perform executable operations comprising:
controlling a first timetag logic block in a first data processing channel to timetag one or more pulses of a first thresholded analog signal received at a first input terminal of the first data processing channel, the timetags forming a first timetag signal comprising one or more first timetags representing one or more first events associated with a first detector of the quantum computing system;
controlling a first timetag processing logic block to determine one or more timetags in the timetag signal that occur within the first time window and a first count value based on the determined one or more timetags; and/or, controlling a first pulse processing logic block to determine one or more pulses in the thresholded analog signal that occur within the first time window and a second count value based on the determined one or more pulses;
controlling a first state computation logic block to determine first state information associated with the quantum computing system based the first timetag and/or pulse count value and based at least one further timetag and/or pulse count value determined by a further data processing channel of the plurality of data processing channels.

13. A control module according to claim 12 wherein the processor is further configured to perform any of steps according to claims 2-11.

14. A control module for processing signals associated with a quantum computing system, which is controlled by at least one control module comprising a plurality of data processing channels, preferably the control module being implemented as one or more application specific integrated circuits (ASICs), one or more field programmable gate arrays (FPGAs), and/or one or more microprocessors, each data processing channel being controlled by a sequence processor and including a timetag logic block, a timetag processing logic block, a pulse processing logic block and state computation logic block, the control module including:
a first timetag logic block in a first data processing channel configured to timetag one or more pulses of a first thresholded analog signal received at a first input terminal of the first data processing channel, to form a first timetag signal comprising one or more first timetags representing one or more first events associated with a first detector of the quantum computing system;
a first timetag processing logic block configured to determine one or more timetags in the timetag signal that occur within the first time window and a first timetag count value based on the one or more determined timetags; and/or, a first pulse processing logic block configured to determine one or more pulses in the thresholded analog signal that occur within the first time window and a first pulse count value based on the one or more determined pulses;
a first state computation logic block in the first data processing channel configured to determine first state information associated with the quantum computing system based the first timetag and/or pulse count value and based on at least one further count value determined by a further data processing channel of the plurality of data processing channels.

15. A computer program product comprising instructions which, when the program is executed by a computer, cause the computer to carry the method steps according to any of claims 1-11.
